# EUROPEAN PATENT APPLICATION

(11) **EP 2 028 092 A1**
(43) Date of publication of application: **25.02.2009**
(21) Application number: 07016569.1
(22) Date of filing: 23.08.2007
(51) Int. Cl.: B62K 19/16, B62K 25/28, B29C 70/30

(54) **Rear frame for bicycle**

(71) Applicant: Yuan Min An Enterprise Co., Ltd., Fong Yuan, Taichung (TW)
(72) Inventor: Yu, Kuo-Pin, Fong Yuan Taichung (TW)
(74) Representative: Becker Kurig Straus

(57) **Abstract**

A rear frame (10, 40, 50, 60, 70) for a bicycle is disclosed to include two tubes (20, 42, 52, 62, 72) and a connecting portion (30, 74). The tubes (20, 42, 52, 62, 72) are respectively made of fiber reinforced material and have at least one rib (22, 44, 54, 64) therein. The connecting portion (30, 74) is connected between the tubes (20, 42, 52, 62, 72). By means of the aforesaid arrangement, the rear frame (10, 40, 50, 60, 70) has a high mechanical strength and light weight.

## Description

### BACKGROUND OF THE INVENTION

### 1. Field of the Invention

The present invention relates to a bicycle and more particularly, to a rear frame for a bicycle, which has a high mechanical strength and light weight.

### 2. Description of the Related Art

The rear part of the frame of a bicycle includes seat stays and chain stays. The seat stays and the chain stays have a similar structure, i.e., both include two tubes approximately parallel to each other and a connecting portion connected between the two tubes. In order to reduce the weight of the seat stays or chain stays, carbon fiber reinforced materials are used. The seat stays and the chain stays are set to support the rear wheel after installation. Therefore, the seat stays and the chain stays must bear the vibration of the rear wheel. Frequently receiving the vibrating force from the rear wheel may cause the seat stays and the chain stays to deform or to break. In order to improve the structural strength, the consumption amount of carbon fiber cloth must be increased. However, increasing the consumption of fiber cloth correspondingly increases the weight of the seat stays and the chain stays.

### SUMMARY OF THE INVENTION

The present invention has been accomplished under the circumstances in view. It is therefore the main object of the present invention to provide a rear frame for a bicycle, which has a high mechanical strength and light weight.

To achieve this and other objects of the present invention, the rear frame comprises two tubes and a connecting portion. The tubes are made of fiber reinforced material. The connecting portion is connected between the two tubes. The tubes each have at least one rib therein to reinforce the structural strength. Therefore, the invention achieves the desired structural strength without increasing material consumption.

### BRIEF DESCRIPTION OF THE DRAWINGS

FIG 1 is a front view of a rear frame for a bicycle in accordance with a first preferred embodiment of the present invention.
FIG 2 is a sectional view taken along line 2-2 of FIG 1.
FIG 3 is a sectional view taken along line 3-3 of FIG. 1.
FIG 4 is a sectional view of a rear frame in accordance with a second preferred embodiment of the present invention.
FIG 5 is a sectional view of a rear frame in accordance with a third preferred embodiment of the present invention.
FIG 6 is a sectional view of a rear frame in accordance with a fourth preferred embodiment of the present invention.
FIG 7 is a sectional view of a rear frame in accordance with a fifth preferred embodiment of the present invention.

### DETAILED DESCRIPTION OF THE INVENTION

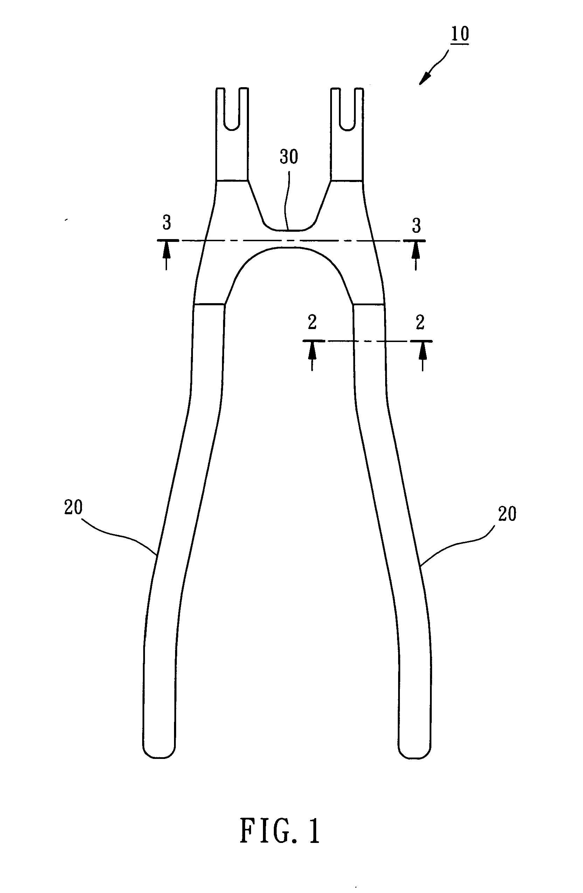

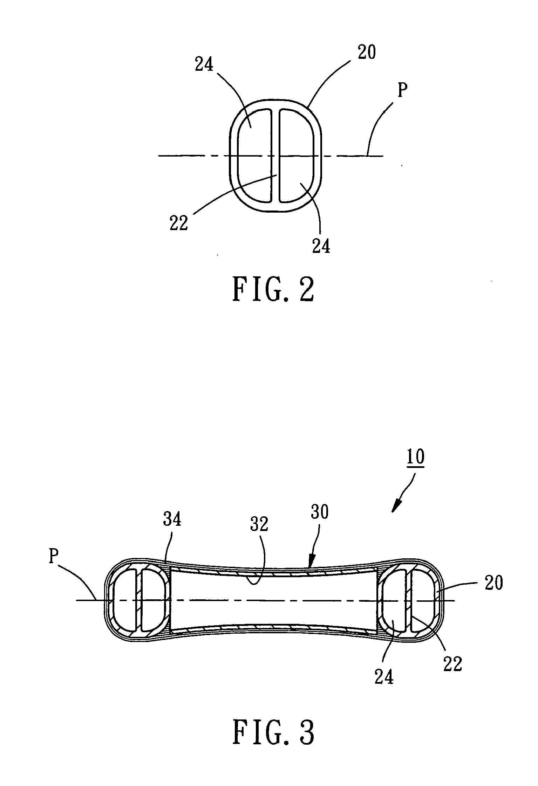

Referring to FIGS. 1-3, a rear frame **10** for bicycle in accordance with the first preferred embodiment of the present invention is shown comprising two tubes **20** and a connecting portion **30.** The rear frame **10** can be the seat stays or chain stays of a bicycle for connecting between the seat tube and the rear wheel.

The two tubes **20** are made of fiber reinforced resin. The fiber used can be carbon fiber, glass fiber, boron fiber or Kevlar fiber. The resin used can be thermosetting resin or thermoplastic resin. The two tubes **20** are substantially disposed on a same imaginary plane **P.** The two tubes **20** each have a rib **22** therein. The rib **22** divides the inside space of the respective tube **20** into two chambers **24.** The rib **22** extends approximately perpendicular to the imaginary plane **P.**

The connecting portion **30** is connected between the two tubes **20** to join the two tubes 20 together. The connecting portion 30 is a tubular member made of fiber reinforced resin. During fabrication, the two tubes 20 are shaped and cured firstly. Then several pre-pregs are rolled up to form a tubular connecting member **32.** The connecting member **32** is positioned between the two tubes **20.** The connecting member **32** and the two tubes **20** are connected by winding pre-pregs **34** around the connecting member **32** and the two tubes **20.** The connecting portion **30** is formed between the two tubes **20** after the connecting member **32** and the pre-pregs **34** are cured.

The ribs **22** greatly reinforce the mechanical strength of the tubes **20,** enabling the tubes **20** to bear a greater external force, more particularly, the force in direction perpendicular to the imaginary plane **P.** Therefore, the mechanical strength of the whole structure of the rear frame **10** can be greatly increased without increasing the consumption of the fiber reinforced resin, or the desired mechanical strength of the rear frame **10** can be achieved with less material consumption, i.e., the rear frame **10** of the present invention has the advantages of light weight and high mechanical strength. The rib **22** of each tube **20** can be made in any of a variety of shapes.

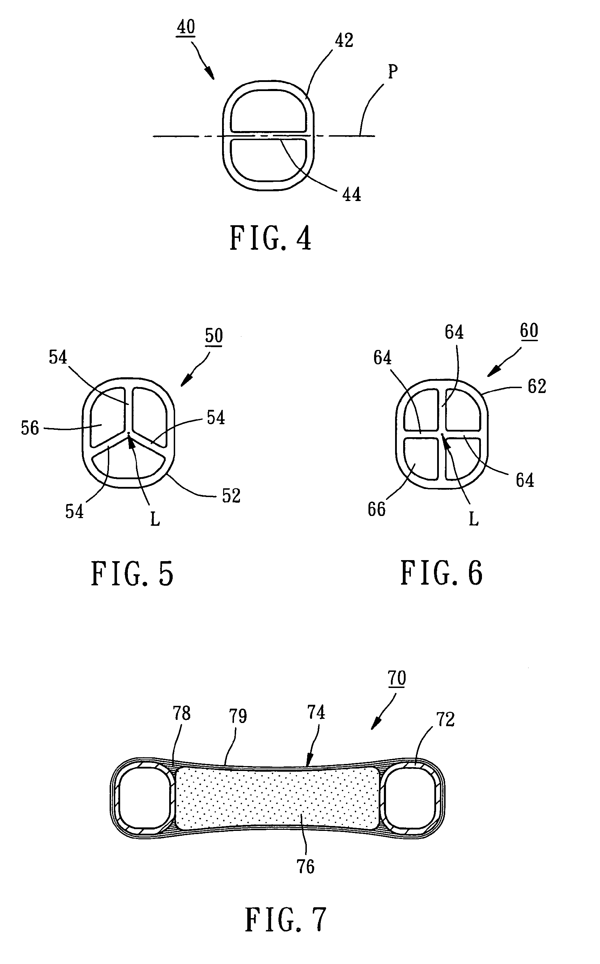

FIG 4 shows a rear frame **40** in accordance with the second preferred embodiment of the present invention. According to this embodiment, the two tubes **42** are substantially disposed on an imaginary plane **P,** each having a rib **44** therein. The rib **44** extends approximately in parallel to the plane **P.** The ribs **44** greatly increase the structural strength of the tubes **42,** enabling the tubes **42** to bear a high pressure, more particularly, the pressure in the direction in parallel to the plane **P.**

FIG 5 shows a rear frame **50** in accordance with the third preferred embodiment of the present invention. According to this embodiment, each tube **52** has three ribs **54** therein. These three ribs **54** extend from the inner wall of the respective tube **52** and converge on a line **L.** These three ribs **54** divide the inside space of the respective tube **52** into three chambers **56.** This design greatly increases the structural strength of the tubes **52** in all directions.

FIG 6 shows a rear frame **60** in accordance with the fourth preferred embodiment of the present invention. According to this embodiment, each tube **62** has four ribs **64** therein. These four ribs **64** extend from the inner wall of the respective tube **62** and converge on a line **L.** These four ribs **64** divide the inside space of the respective tube **62** into four chambers **66.** This design greatly increases the structural strength of the tubes **62** more even in all directions.

The connecting portion may be made by means of many other ways. FIG. 7 shows a rear frame **70** in accordance with the fifth preferred embodiment of the present invention. The rear frame **70** according to this embodiment comprises two tubes **72** and a connecting portion **74** connected between the two tubes **72.** The fabrication of this rear frame **70** is outlined hereinafter. After the two tubes **72** made of fiber reinforced resin are cured, a connecting member **76** prepared from a foam core is positioned between the two tubes **72.** The connecting member **76** and the two tubes **72** are connected by winding pre-pregs **78** around the connecting member **76** and the two tubes **72.** The pre-pregs **78** forms a tubular member **79** and the connecting portion **74** is formed between the two tubes **72** after the pre-pregs **78** is cured. The tubular member **79** is stuffed with a foam core then.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A rear frame (10, 40, 50, 60, 70) for a bicycle, comprising:
two tubes (20, 42, 52, 62, 72) respectively made of fiber reinforced material and having at least one rib (22, 44, 54, 64) therein; and
a connecting portion (30, 74) connected between said tubes (20, 42, 52, 62, 72).

2. The rear frame (10, 40) as claimed in claim 1, wherein the number of said rib (22, 44) of each of said tubes (20, 42) is one and the rib (22, 44) divides the inside space of the respective tube (20, 42) into two chambers (24).

3. The rear frame (40) as claimed in claim 2, wherein said two tubes (42) are disposed on a same imaginary plane (P) and the ribs (44) of said tubes (42) extend substantially in parallel to said imaginary plane (P).

4. The rear frame (10) as claimed in claim 2, wherein said two tubes (20) are disposed on a same imaginary plane (P) and the ribs (22) of said tubes (20) extend substantially in direction perpendicular to said imaginary plane (P).

5. The rear frame (50) as claimed in claim 1, wherein the number of said rib (54) of each of said tubes (52) is three; the three ribs (54) of each of said tubes (52) extend from an inner wall of the respective tube (52) and converge on a line (L) and divide the inside space of the respective tube (52) into three chambers (56).

6. The rear frame (60) as claimed in claim 1, wherein the number of said rib (64) of each of said tubes (62) is four; the four ribs (64) of each of said tubes (62) extend from an inner wall of the respective tube (62) and converge on a line (L) and divide the inside space of the respective tube (62) into four chambers (66).

7. The rear frame (10, 40, 50, 60, 70) as claimed in claim 1, wherein said connecting portion (30, 74) is a tubular member.

8. The rear frame (70) as claimed in claim 7, wherein said tubular member (79) is stuffed with a foam core (76).
